# DEMANDE DE BREVET EUROPEEN

(11) **EP 3 726 179 A1**
(43) Date de publication de la demande: **21.10.2020**
(21) Numéro de dépôt: 20169213.4
(22) Date de dépôt: 10.04.2020
(51) Int. Cl.: F42B 12/40, F41G 7/22

(54) **DISPOSITIF DE MARQUAGE DE CIBLE ET SYSTÈMES DE LOCALISATION ET DE TRAITEMENT DE CIBLE COMPRENANT UN TEL DISPOSITIF**

(30) Priorité: 16.04.2019 FR 1903983
(71) Demandeur: MBDA France, 92350 Le Plessis-Robinson (FR)
(72) Inventeur: FORMOSO, Mathias, 92350 Le Plessis-Robinson (FR); JEAUNEAU, Vincent, 92350 Le Plessis-Robinson (FR); KOTENKOFF, Alexandre, 92350 Le Plessis-Robinson (FR)
(74) Mandataire: Gevers & Orès

(57) **Abrégé**

- Dispositif de marquage de cible et systèmes de localisation et de traitement de cible comprenant un tel dispositif.
- Le dispositif de marquage de cible (1) comprend un drone (2) pourvu d'au moins un émetteur (4), l'émetteur (4) comportant un élément d'activation (10) pour l'activer afin qu'il émette à un instant donné un signal (S) représentant une information de position, l'émetteur (4) étant configuré pour émettre au moins l'un des signaux suivants : un signal infrarouge, un signal lumineux, un signal sonore, un signal généré par une substance chimique, le dispositif de marquage de cible (1) faisant partie d'un système de localisation de cible (6) et/ou d'un système de traitement de cible pourvu d'un engin mobile (7).

## Description

### DOMAINE TECHNIQUE

La présente invention concerne un dispositif de marquage de cible et des systèmes de localisation et de traitement de cible comprenant un tel dispositif de marquage de cible.

### ÉTAT DE LA TECHNIQUE

Bien que non exclusivement, la présente invention s'applique plus particulièrement au domaine militaire et à la neutralisation d'une cible, tel qu'un char par exemple, par l'intermédiaire d'au moins un missile.

Par le document FR-3 016 690, on connaît un dispositif de marquage de cible qui comprend au moins un drone de taille réduite, qui est configuré pour voler à basse hauteur et pour être guidé à l'aide d'ordres de guidage, afin de s'approcher d'une cible et de la marquer. Le marquage est réalisé par l'intermédiaire d'un émetteur actif qui est monté sur le dispositif de marquage de cible et qui est configuré pour générer l'émission d'un signal électromagnétique, de type radiofréquence.

Ce dispositif de marquage de cible peut être intégré dans un système de neutralisation d'une cible. Le système de neutralisation comporte également un missile destiné à neutraliser la cible, qui est dirigé vers le marquage de la cible, réalisé par le drone.

Ainsi, grâce au marquage de cible réalisé à l'aide du drone, il n'est pas nécessaire que le missile (ou un opérateur) émette des signaux, notamment un faisceau de désignation de cible, pour le guidage du missile de neutralisation vers la cible. Le missile est donc discret.

Un tel dispositif de marquage de cible et ainsi un tel système de neutralisation qui présentent des avantages importants ne sont, toutefois, pas complètement discrets. L'environnement autour de la cible peut, en effet, comporter de détecteurs aptes à détecter des signaux radiofréquence (et notamment ceux utilisés pour le marquage), souvent utilisés dans le domaine militaire.

Par ailleurs, le document EP-1 659 359 décrit un dispositif de munition ou de composant de munition comprenant un chargement pyrothechnique associé à une enveloppe. Le chargement pyrotechnique de la munition peut prendre deux formes. Il peut constituer, soit une charge explosive susceptible de fournir une énergie chimique et/ou mécanique, soit une charge pyrotechnique combustible susceptible de générer, par exemple, des effets chimiques, fumigènes, lumineux ou sonores. La munition peut remplir des missions de destruction ou des missions de protection par masquage, leurrage ou brouillage.

La présente invention a pour objet de perfectionner, notamment, un dispositif de marquage de cible.

### EXPOSÉ DE L'INVENTION

La présente invention concerne un dispositif de marquage de cible comprenant au moins un drone pourvu d'au moins un émetteur apte à émettre une information de position, qui permet de remédier à l'inconvénient précité.

A cet effet, selon l'invention, l'émetteur comporte un élément d'activation (apte à être commandé) pour activer ledit émetteur afin qu'il émette au moins à un instant donné au moins un signal représentant l'information de position, et l'émetteur est configuré pour émettre au moins l'un des signaux suivants : un signal infrarouge, un signal lumineux, un signal sonore, un signal généré par une substance chimique.

Ainsi, grâce à l'invention, on est en mesure d'émettre des signaux variés, autres que des signaux radiofréquence, pour lesquels dans le cas d'une application militaire le risque de se trouver en présence de détecteurs (ennemis) appropriés est faible. Par conséquent, on dispose d'un dispositif de marquage de cible pourvu d'un émetteur qui est très discret, ce qui lui permet de s'approcher à proximité d'une cible sans être repéré si nécessaire.

De plus, l'élément d'activation peut être commandé pour activer l'émission du signal à des instants donnés, et de manière particulière, par exemple par intermittence pour certaines applications, ce qui permet de réaliser une émission de signal discrète et/ou efficace (c'est-à-dire facilement détectable par un détecteur approprié associé).

L'émission du signal est destinée spécifiquement à marquer la cible, c'est-à-dire à laisser une marque (ou trace) détectable, correspondant à des informations de position permettant de localiser la cible. Le signal émis est généré dans le but de marquer la cible. En général, il peut être répété à des instants souhaités. L'émetteur est en général activable et désactivable à distance, et ceci généralement à volonté.

En outre, dans le cadre de la présente invention, l'émetteur peut être de types variés, très différents les uns des autres, comme précisé ci-dessous, ce qui permet une flexibilité d'utilisation et de mise en œuvre de l'invention.

De plus, dans un mode de réalisation particulier, le drone est pourvu d'une pluralité d'émetteurs de même type ou de types différents.

Dans un premier mode de réalisation, l'émetteur est configuré pour émettre un signal infrarouge. Avantageusement, dans ce cas, l'émetteur configuré pour émettre le signal infrarouge comporte l'une des sources de chaleur suivantes : une source de chaleur de type chimique, une source de chaleur de type électrique.

Dans un deuxième mode de réalisation, l'émetteur est configuré pour émettre un signal lumineux. Avantageusement, dans ce cas, l'émetteur configuré pour émettre le signal lumineux est configuré pour émettre un signal lumineux continu et/ou un signal lumineux discontinu et/ou un signal lumineux modulé.

En outre, dans un troisième mode de réalisation, l'émetteur est configuré pour émettre un signal sonore, de préférence modulé. Avantageusement, dans ce cas, le signal sonore modulé est crypté.

Par ailleurs, dans un quatrième mode de réalisation, l'émetteur configuré pour émettre un signal généré par une substance chimique est configuré pour appliquer, comme substance chimique, une substance colorante. Avantageusement, l'émetteur est configuré pour appliquer la substance colorante, à distance ou au contact. De plus, de façon avantageuse, la substance colorante est l'une des substances suivantes : une substance photoluminescente, une substance phosphorescente, une substance fluorescente.

En outre, dans un cinquième mode de réalisation, l'émetteur configuré pour émettre un signal généré par une substance chimique est configuré pour appliquer, comme substance chimique, une substance olfactive. Avantageusement, dans ce cas, l'émetteur est configuré pour projeter ou vaporiser la substance olfactive.

Par ailleurs, dans un mode de réalisation particulier, l'émetteur est lié au drone selon l'une des manières suivantes :
- il est fixé sur le drone ;
- il est monté, de façon amovible, sur le drone et est pourvu d'au moins un élément d'attache configuré pour permettre d'attacher ledit émetteur sur un support ;
- il est tracté par le drone.

En outre, avantageusement, le drone comporte au moins l'une des unités suivantes :
- une unité de guidage automatique comprenant une unité centrale configurée pour déterminer automatiquement des ordres de guidage et un système de guidage configuré pour guider automatiquement le drone conformément à ces ordres de guidage déterminés ;
- une unité de téléguidage comprenant une unité de réception configurée pour recevoir des ordres de guidage et un système de guidage configuré pour guider automatiquement le drone conformément à ces ordres de guidage reçus.

La présente invention concerne également un système de localisation de cible. Selon l'invention, ledit système de localisation de cible comprend :
- au moins un dispositif de marquage de cible, tel que celui précité ; et
- au moins un engin mobile, par exemple un drone ou un aéronef ou bien un système d'arme tel qu'un missile, comprenant au moins un détecteur apte à détecter au moins un signal émis par ledit au moins un émetteur dudit drone du dispositif de marquage de cible, pour localiser la cible.

La présente invention concerne également un système de traitement de cible. Selon l'invention, ledit système de traitement de cible comprend au moins un système de localisation de cible, tel que celui précité, et l'engin mobile, notamment volant, en particulier un missile, comprend des moyens de traitement d'une cible localisée.

Ledit système de localisation de cible et ledit système de traitement de cible, conformes à la présente invention, peuvent être mis en œuvre dans différentes applications.

En particulier, dans une première application :
- ledit dispositif de marquage de cible est un dispositif de marquage d'une cible à neutraliser, par exemple un char ; et
- ledit engin mobile est un missile destiné à neutraliser (détruire) cette cible. Le dispositif de marquage de cible dispose ainsi d'un émetteur apte à émettre une information de position, et ainsi apte à marquer une cible afin que cette cible puisse être neutralisée par un moyen de neutralisation (ou de traitement) tel qu'un missile par exemple.

En outre, dans une seconde application :
- ledit dispositif de marquage de cible est un dispositif de localisation d'une ou plusieurs personnes en détresse ; et
- ledit engin mobile est un véhicule de secours, de préférence un aéronef de secours.

### BRÈVE DESCRIPTION DES FIGURES

Les figures du dessin annexé feront bien comprendre comment l'invention peut être réalisée. Sur ces figures, des références identiques désignent des éléments semblables.
La figure 1 est le schéma synoptique d'un dispositif de marquage de cible qui illustre un mode de réalisation particulier de l'invention.
La figure 2 est une vue schématique, en perspective, d'un exemple de drone d'un dispositif de marquage de cible.
La figure 3 est le schéma synoptique d'un système de localisation de cible pourvu d'un dispositif de marquage de cible.
La figure 4 illustre schématiquement un émetteur conforme à un premier mode de réalisation.
La figure 5 illustre schématiquement un émetteur conforme à un deuxième mode de réalisation.
La figure 6 illustre schématiquement un émetteur conforme à un troisième mode de réalisation.
La figure 7 illustre schématiquement un émetteur conforme à un quatrième mode de réalisation.
La figure 8 illustre schématiquement un émetteur conforme à un cinquième mode de réalisation.
La figure 9 illustre un premier exemple de système de traitement de cible pourvu d'un dispositif de marquage de cible, dans le domaine militaire, appliqué à la neutralisation d'un char ennemi.
La figure 10 illustre un deuxième exemple de système de traitement de cible pourvu d'un dispositif de marquage de cible, appliqué au secours d'une personne en détresse.

### DESCRIPTION DÉTAILLÉE

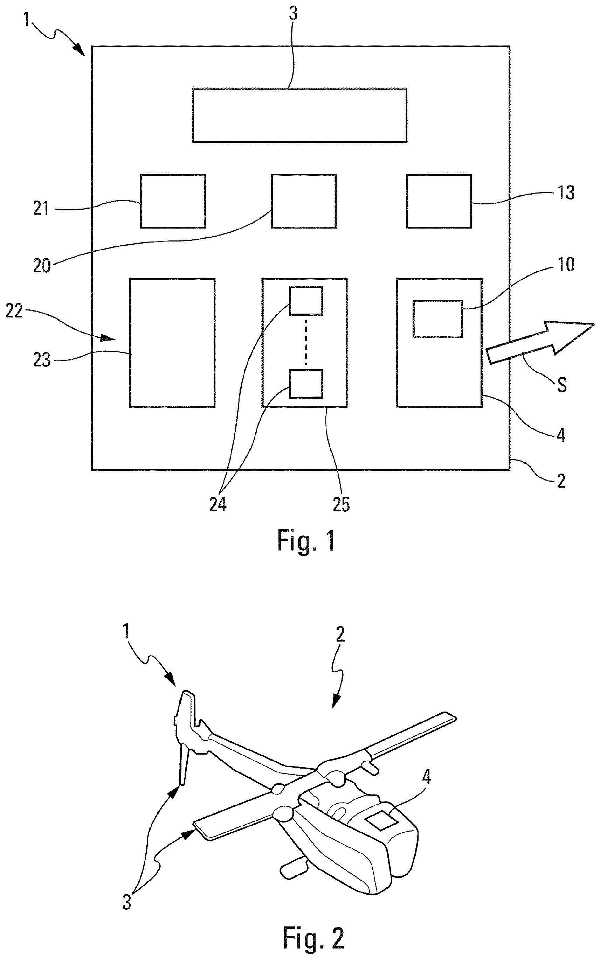

Le dispositif 1 représenté schématiquement sur la figure 1 et permettant d'illustrer l'invention, est destiné au moins à marquer une cible, à savoir un objet ou une personne d'intérêt.

Ce dispositif de marquage de cible 1 comprend au moins un drone 2 représenté, à titre d'illustration, dans un exemple particulier sur la figure 2. Le drone 2 comprend des moyens 3 usuels (notamment des moyens de sustentation (aile fixe, aile tournante,...) et de génération d'une force d'avancement)), qui sont représentés de façon schématique et qui sont formés de manière à faire voler le drone 2.

Le drone 2 est pourvu d'au moins un émetteur 4 apte à émettre un signal (représentant une information de position) qui est illustré schématiquement par une flèche S sur la figure 1.

L'émetteur 4 comporte un élément d'activation 10 (apte à être commandé) pour l'activer afin qu'il émette au moins à un instant donné au moins un signal représentant l'information de position. De plus, comme précisé ci-dessous, l'émetteur 4 est configuré pour émettre au moins l'un des signaux suivants : un signal infrarouge, un signal lumineux, un signal sonore, un signal généré par une substance chimique.

Ainsi, le dispositif de marquage de cible 1 peut émettre des signaux variés (autres que des signaux radiofréquence), pour lesquels, dans le cas d'une application militaire, le risque de trouver des détecteurs (ennemis) appropriés (aptes à le détecter) est faible. Par conséquent, on dispose d'un dispositif de marquage de cible 1 pourvu d'un émetteur 4 qui est très discret, ce qui lui permet de s'approcher à proximité d'une cible sans être repéré si nécessaire.

L'émetteur 4 (destiné à émettre un signal) est considéré comme discret, notamment car il n'est pas actif d'un point de vue radioélectrique et n'émet pas de signal radiofréquence.

De plus, l'élément d'activation 10 peut être commandé (via une unité de commande 13 intégrée ou non dans l'émetteur) pour activer l'émission du signal à des instants donnés, et de manière particulière, par exemple par intermittence pour certaines applications, ce qui permet de réaliser une émission de signal qui est discrète et/ou très efficace (c'est-à-dire facilement détectable par un détecteur approprié associé), au choix, en fonction de l'application et du besoin. L'élément d'activation 10 peut être commandé pour activer l'émission lorsque des conditions particulières sont remplies, par exemple lorsque le drone 2 est en contact de la cible. Ces conditions peuvent être déterminées automatiquement à bord du drone 2 ou être reçues de l'extérieur du drone 2 (par exemple via une unité 22 précisée ci-dessous).

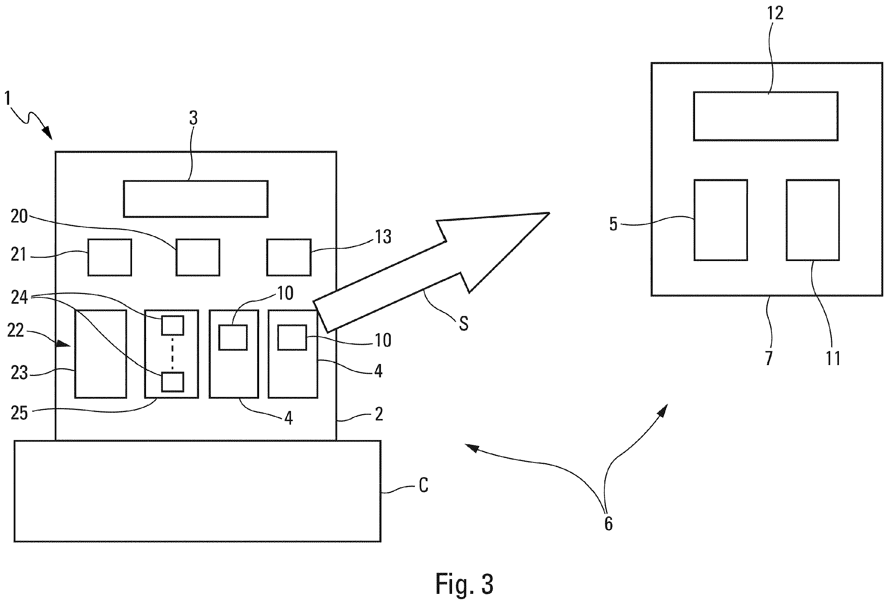

Le signal émis par l'émetteur 4 est apte à être détecté par un détecteur 5 (figure 3) approprié, précisé ci-dessous. Lorsque le signal est émis à partir de la cible C (représentée schématiquement sur la figure 3) ou depuis l'environnement proche de la cible C, en détectant ledit signal 4 émis et en identifiant sa position, on est en mesure de localiser et positionner la cible C.

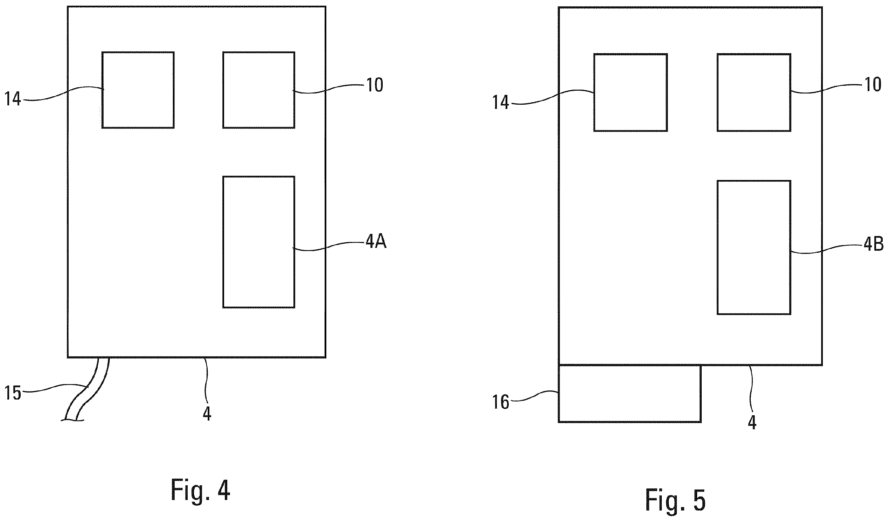

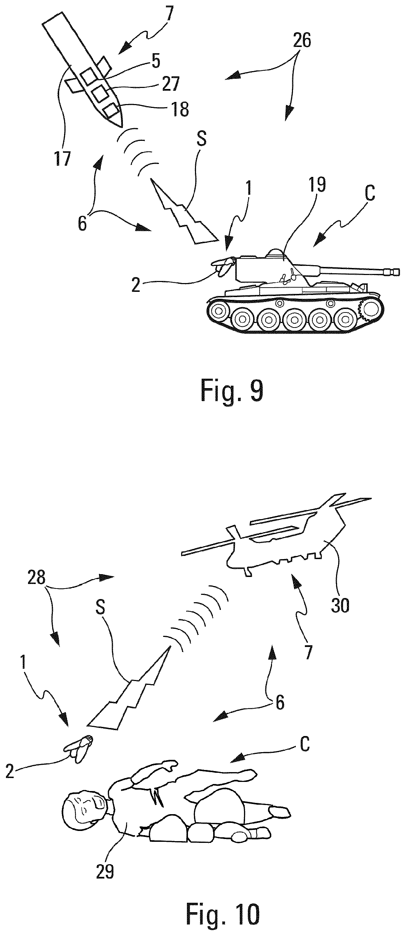

Dans un mode de réalisation particulier, l'émetteur 4 est lié au drone 2 selon l'une des manières suivantes :
- il est fixé sur le drone 2. Dans ce cas, pour marquer une cible C, par exemple un char 19, le drone 2 peut se poser directement sur la cible C, comme représenté sur la figure 9 ;
- il est lié au drone 2 sans être en contact par l'intermédiaire d'un lien, par exemple un fil 15 comme représenté dans l'exemple de la figure 4, et il est tracté par le drone 2 ;
- il est monté, de façon amovible, sur le drone 2 et est pourvu d'au moins un élément d'attache configuré pour permettre d'attacher ledit émetteur 4 sur un support.

Dans ce dernier mode de réalisation, l'émetteur 4 est donc pourvu d'au moins un élément d'attache 16, comme illustré dans l'exemple de la figure 5, qui permet d'attacher ledit émetteur 4 sur un support (autre que le drone 2) et notamment sur une cible. Dans ce cas, le drone 2 se pose sur la cible C et libère l'émetteur 4 qui est attaché sur la cible C, à l'aide de l'élément d'attache 16. Le drone 2 peut ensuite s'écarter de la cible C, afin de ne pas être atteint lors d'un traitement ou d'une destruction de la cible C et/ou pour réaliser une autre mission. En particulier, le drone 2 peut comporter une pluralité d'émetteurs 4 amovibles qu'il peut placer successivement sur différentes cibles.

L'élément d'attache 16 pour attacher (ou accrocher) l'émetteur 4 sur une cible C, peut comporter au moins l'un des éléments : un adhésif chimique, un aimant, une ventouse, une fixation mécanique,...

De façon générale, le drone 2 peut comporter une pluralité d'émetteurs 4, comme représenté dans l'exemple de la figure 3 où il en comporte deux. Dans un mode de réalisation particulier, le drone 2 est pourvu d'au moins deux émetteurs 4 de même type, ce qui permet de disposer d'un ou plusieurs autres émetteurs en cas de dysfonctionnement de l'un des émetteurs, ou ce qui permet, dans certaines applications, d'augmenter l'intensité du signal émis en faisant fonctionner simultanément plusieurs émetteurs.

En variante et/ou en complément, le drone 2 est pourvu d'au moins deux émetteurs 4 de types différents, ce qui augmente la flexibilité d'utilisation du dispositif de marquage de cible 1.

Dans un mode de réalisation préféré, le dispositif de marquage de cible 1 fait partie d'un système de localisation de cible 6.

Ledit système de localisation de cible 6 comprend, comme représenté sur la figure 3 :
- au moins un dispositif de marquage de cible 1 ; et
- au moins un engin mobile 7, l'engin mobile 7 comprenant au moins un détecteur 5 apte à détecter un signal émis par l'émetteur 4 dudit drone 2 du dispositif de marquage de cible 1 pour localiser la cible C.

L'engin mobile peut être un engin terrestre ou maritime.

Dans une application préférée, l'engin mobile est un engin volant 7 qui comprend, comme représenté sur la figure 3 :
- le détecteur 5 apte à détecter les signaux (à savoir des informations de position), émis par l'émetteur 4 du dispositif de marquage de cible 1 ;
- une unité de gestion 11 formée de manière à gérer (ou traiter) notamment ces informations de position, en vue du guidage de l'engin volant et/ou de leur transmission à un poste ou engin auxiliaire déporté ; et
- des moyens usuels 12 (notamment des moyens de sustentation (aile, aileron,...) et des moyens de génération d'une force d'avancement (réacteur, aile tournante,...)), qui sont représentés de façon schématique et qui sont formés de manière à faire voler l'engin volant 7.

L'engin mobile 7 peut correspondre à tout engin, notamment volant, qui est apte à s'approcher suffisamment près du drone 2 ou d'une cible C pour que le détecteur 5 soit apte à détecter un signal émis par l'émetteur 4 du un dispositif de marquage de cible 1.

A titre d'illustration, l'engin volant 7 peut être un drone ou un aéronef. L'engin volant 7 peut également correspondre à un système d'arme tel qu'un missile 17, comme illustré sur la figure 9. Dans ce cas, dans une application militaire préférée, le missile 17 comporte un autodirecteur 18 qui le guide vers le signal S émis par le dispositif de marquage de cible 1 et détecté par un détecteur 5 embarqué sur ledit missile 17.

Le système de localisation de cible 6 peut être mis en œuvre dans différentes applications précisées ci-dessous.

De plus, dans le cadre de la présente invention, l'émetteur 4 peut être de types différents, très variés, comme précisé ci-après, ce qui permet une flexibilité d'utilisation ou de mise en œuvre du dispositif de marquage de cible 1.

Dans un premier mode de réalisation représenté sur la figure 4, l'émetteur 4 comporte un élément d'émission 4A configuré pour émettre un signal infrarouge.

Cet émetteur 4 réalise un marquage via une signature infrarouge. Il est configuré pour signaler la cible ou son environnement proche au moyen d'un élément présentant une forte signature infrarouge, afin de faciliter la localisation de la cible.

Dans un mode de réalisation particulier, l'élément d'émission 4A est une balise thermique (ou calorique).

Dans le cas d'une application militaire telle que précitée, la balise thermique possède une signature IR suffisante pour que l'autodirecteur 18 d'un missile 17 (figure 9) et les traitements de l'autodirecteur puissent l'extraire d'un flux vidéo et la suivre.

Dans un mode de réalisation particulier, l'émetteur 4 comporte un élément d'activation 10 configuré pour activer la balise thermique. L'élément d'activation 10 est configuré pour activer la balise thermique au moment opportun, et ceci pendant une durée suffisante pour permettre la détection du signal infrarouge, et ainsi de la cible qui est marquée par le signal infrarouge.

Dans le cas d'une application militaire particulière, telle que présentée sur la figure 9 par exemple, comprenant un missile 17 qui est guidé par un autodirecteur 18 vers le signal S détecté par le détecteur 5, la balise thermique 4B peut par exemple être activée au moment où le missile 17 se rapproche de la cible C, en l'occurrence un char 19. Dans ce cas, la durée d'activation peut aller de quelques secondes à quelques dizaines de secondes, en réalisant un compromis entre efficacité et discrétion.

Dans un mode de réalisation particulier, l'émetteur 4 comporte un élément de commande 14 configuré pour moduler le signal infrarouge émis par l'élément d'émission 4A afin de faciliter son identification, en particulier en cas de bruit infrarouge dans l'environnement de la cible. Ceci permet de faciliter la localisation et l'identification du signal infrarouge par l'autodirecteur 18 du missile 17 ou par un opérateur disposant d'une vidéo sur laquelle est reproduit ledit signal infrarouge.

A titre d'exemple, l'émetteur 4 peut comporter, comme balise thermique 4A :
- une source de chaleur d'origine chimique à faible intensité. Dans ce cas, une réaction chimique permet de produire de la chaleur qui représente le signal infrarouge ; et/ou
- une source de chaleur d'origine chimique à forte intensité. Dans ce cas, la balise thermique à forte signature, peut comporter une cartouche de poudre de type « leurre d'autoprotection » ; et/ou
- une source de chaleur d'origine électrique. Dans ce cas, un matériel résistif et un courant de forte intensité permettent de produire, ponctuellement, une forte quantité de chaleur, qui représente le signal infrarouge.

L'émetteur 4 est lié au drone 2 selon l'une des manières suivantes :
- il peut être fixé sur le drone 2. Pour marquer une cible C, par exemple un char 19, le drone 2 se pose directement sur la cible C, comme représenté sur la figure 9 ; ou
- il peut être lié au drone 2 sans être en contact par l'intermédiaire d'un lien, par exemple le fil 15 (figure 4), et il est alors tracté par le drone 2 ; ou
- il peut être monté, de façon amovible, sur le drone 2 et est pourvu d'au moins un élément d'attache configuré pour permettre d'attacher ledit émetteur sur un support.

L'élément d'attache pour attacher (ou accrocher) l'émetteur 4 sur une cible C peut comporter au moins l'un des éléments suivants : un dispositif magnétique, une colle, un harpon, une ventouse,...

Avec un émetteur 4 correspondant à ce premier mode de réalisation, le système de localisation de cible 6 comporte (sur l'engin mobile 7) un détecteur 5 qui est apte à détecter un tel signal infrarouge. Ce détecter 5 peut par exemple être intégré dans (ou associé à) l'autodirecteur d'un missile.

Dans un deuxième mode de réalisation représenté sur la figure 5, l'émetteur 4 comporte un élément d'émission 4B configuré pour émettre un signal lumineux. Dans ce cas, le signal lumineux est un signal lumineux continu ou un signal lumineux discontinu.

Dans une réalisation particulière, l'élément d'émission 4B peut être une diode électroluminescente DEL (ou «LED» pour « Light-Emitting Diode » en anglais).

Cet élément d'émission 4B embarqué sur le drone 2 est configuré pour générer un signal lumineux de façon continue ou de façon discontinue (et notamment de façon modulée).

Dans un mode de réalisation particulier, l'émetteur 4 comporte un élément de commande 14 configuré pour commander l'élément d'émission 4B afin qu'il émette l'un ou l'autre de ces signaux lumineux, et de préférence tout d'abord un signal lumineux discontinu puis un signal lumineux continu.

La discontinuité du signal lumineux peut correspondre à un flash qui est par exemple émis de façon répétitive à une fréquence donnée, alors que la continuité du signal peut s'apparenter à une lampe torche.

Une mise en œuvre particulière d'un signal lumineux discontinu peut être un signal modulé. Cette modulation consiste à émettre le signal lumineux (discontinu) à des intervalles de temps successifs qui sont prédéterminés et donc connus. Ceci peut notamment permettre de faciliter la détection, en particulier en présence d'un bruit lumineux, ou participer à la discrétion.

L'émission d'un signal lumineux discontinu permet de générer une intensité lumineuse plus importante sur une courte durée (de l'ordre de 1/ 1000 seconde). L'intensité lumineuse étant plus importante, le détecteur de l'engin mobile, par exemple d'un missile, sera capable de la détecter à plus longue distance. En revanche, comme le signal n'est pas continu, la localisation est moins précise. De ce fait, il est avantageux d'émettre un signal continu à plus courte distance (lorsque l'engin mobile s'approche de l'émetteur). L'élément de commande 14 peut être configuré pour commuter l'émission d'un mode d'émission à l'autre, par exemple en fonction de demandes d'un poste de commandement.

L'émission peut donc être adaptée au déroulement de la mission.

Avec un émetteur 4 correspondant à ce deuxième mode de réalisation, le système de localisation de cible 6 comporte (sur l'engin mobile 7) un détecteur 5 qui est apte à détecter un tel signal lumineux.

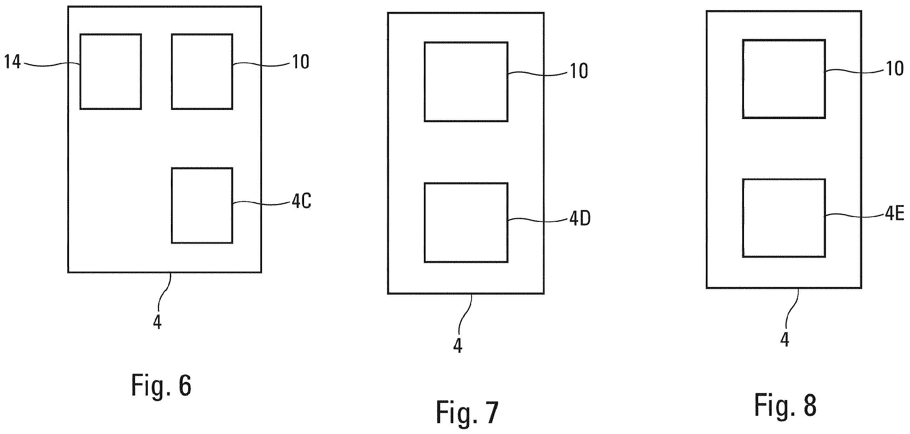

En outre, dans un troisième mode de réalisation représenté sur la figure 6, l'émetteur 4 comporte un élément d'émission 4C configuré pour émettre un signal sonore, par exemple des sons audibles ou des ultrasons.

Ce signal sonore peut correspondre à un signal sonore présentant des fréquences balayant un large spectre sonore, allant de fréquences inaudibles à des fréquences audibles. Le spectre sonore correspond aux fréquences de 30 Hz à 30 kHz. La signature doit être suffisamment caractéristique et discriminante pour pouvoir être repérée dans l'environnement d'intérêt.

Dans un mode de réalisation préféré, l'émetteur 4 comporte une unité de commande 14 configurée pour commander l'élément d'émission 4C afin qu'il émette un signal sonore modulé.

La modulation correspond à un signal crypté. La modulation peut être réalisée en fréquence, c'est-à-dire que la fréquence change au cours du temps, en amplitude, en phase, en impulsion ou bien en une combinaison de plusieurs de ces différentes manières.

L'élément d'émission 4C peut comporter un simple émetteur microphone et son dispositif de réception, ou des transducteurs piézoélectriques pour émettre des ultrasons.

Avec un émetteur 4 correspondant à ce troisième mode de réalisation, le système de localisation de cible 6 comporte (sur l'engin mobile 7) un détecteur 5 qui est apte à détecter un tel signal sonore.

Par ailleurs, dans un quatrième mode de réalisation représenté sur la figure 7, l'émetteur 4 comporte un élément d'émission 4D qui est configuré pour émettre (ou appliquer) une substance chimique, à savoir une substance colorante.

Dans ce cas, l'émetteur 4 est configuré pour émettre la substance colorante, à distance ou au contact.

À titre d'exemple, l'élément d'émission 4D est configuré pour déposer sur la cible, comme substance colorante, de la peinture photoluminescente, de la peinture phosphorescente, ou de la peinture UV fluorescente. Le

dépôt de la substance colorante sur la cible, par l'élément d'émission 4D, peut être effectué à distance de la cible ou au contact de la cible.

Dans un mode de réalisation particulier, l'émetteur 4 comporte un élément d'activation 10 configuré pour activer l'élément d'émission 4D afin qu'il émette la substance colorante à l'instant approprié.

Dans une réalisation particulière, l'élément d'émission 4D comporte un mécanisme de tir permettant d'éjecter une capsule contenant la substance colorante. L'impact de la capsule sur la cible, entraînant la destruction de la capsule, permet le dépôt de la substance colorante sur la cible.

Par ailleurs, dans une autre réalisation particulière, l'élément d'émission 4D comporte une bombonne aérosol contenant la substance colorante. L'élément d'activation 10 déclenche la bombonne aérosol afin de vaporiser la substance colorante sur la cible, à l'instant approprié, par exemple lorsque le drone est en contact de la cible.

Un tel émetteur 4 est complètement passif.

Avec un émetteur 4 correspondant à ce quatrième mode de réalisation, le système de localisation de cible 6 comporte (sur l'engin mobile 7) un détecteur 5 qui est apte à détecter une telle substance colorante.

Dans le cas de l'utilisation d'une substance phosphorescente ou photoluminescente, le détecteur 5 peut comporter une caméra optronique ou un détecteur apte à détecter une intensité lumineuse. Dans le cas de l'utilisation d'une substance UV fluorescente, le détecteur 5 peut comporter une caméra UV.

Par ailleurs, dans un cinquième mode de réalisation représenté sur la figure 8, l'émetteur 4 comporte un élément d'émission 4E qui est configuré pour émettre (ou appliquer) une substance chimique, à savoir une substance olfactive. Plus particulièrement, l'élément d'émission 4E est configuré pour projeter ou vaporiser la substance chimique olfactive (générant un signal olfactif).

La substance olfactive présentant une signature olfactive est donc déposée sur la cible, par vaporisation ou par projection mécanique. Elle est choisie pour être suffisamment discriminante de manière à pouvoir être repérée dans l'environnement. Ainsi déposée, la substance olfactive permet de marquer la cible. La substance olfactive peut en particulier être détectée par un animal, notamment un chien.

Un tel émetteur 4 est complètement passif.

Avec un émetteur 4 correspondant à ce quatrième mode de réalisation, le système de localisation de cible 6 comporte (sur l'engin mobile 7) un détecteur 5 qui est apte à détecter un tel signal olfactif.

Dans une réalisation particulière, le détecteur 5 comporte un nez électronique, de portée suffisante pour localiser le signal olfactif à une distance compatible avec l'application visée. Dans le cas où l'engin mobile du système de localisation de cible 6 est un drone aéroporté discret, cette distance peut être de quelques mètres.

On précise ci-après des caractéristiques d'un mode de réalisation particulier du drone 2.

Le drone 2 est formé de manière à voler, par exemple à basse hauteur, en étant guidé à l'aide d'ordres de guidage.

Pour ce faire, le drone 2 comporte, comme représenté sur la figure 1 :
- une unité de guidage automatique 20 embarquée, qui est configurée pour guider automatiquement le drone 2. L'unité de guidage automatique 20 comprend une unité centrale configurée pour déterminer automatiquement des ordres de guidage et un système de guidage configuré pour guider automatiquement le drone 2 conformément à ces ordres de guidage déterminés. Le drone 2 peut ainsi être guidé automatiquement sans intervention (ou avec une intervention restreinte) d'un opérateur ; et/ou
- une unité de téléguidage 21 pour réaliser un guidage à distance du drone 2. L'unité de téléguidage 21 comprend une unité de réception (par exemple l'unité 22) configurée pour recevoir des ordres de guidage et un système de guidage configuré pour guider automatiquement le drone conformément à ces ordres de guidage reçus.

Le drone 2 peut également comporter une unité de transmission de données 22 qui comprend un élément d'émission/réception 23. Cet élément d'émission/réception 23 est monté sur le drone 2 et est formé de manière à émettre et à recevoir des signaux de type électromagnétique, afin de transmettre à distance des données (notamment des données relatives à des mesures réalisées par au moins un capteur 24 ou un détecteur 5 du drone) à partir du drone 2 et de recevoir des ordres, par exemple de guidage, au niveau du drone 2. Pour ce faire, l'unité de transmission de données 22 comprend, de plus, au moins un autre élément d'émission/réception déporté qui est agencé à distance, par exemple au niveau d'un poste déporté, notamment au sol, et qui est apte à échanger, de façon usuelle, des informations avec l'élément d'émission/réception 23 monté sur le drone 2. L'élément d'émission/réception déporté peut également être agencé sur un engin mobile, par exemple un engin volant.

De plus, de préférence, le drone 2 peut être pourvu d'un ou de plusieurs capteurs 24 qui sont, notamment, aptes à mesurer des paramètres de l'environnement.

Dans un mode de réalisation préféré, le drone 2 est pourvu au moins d'un capteur 24 apte à générer une image d'au moins une partie de l'environnement du drone 2, et l'unité de transmission de données 22 est configurée pour transmettre cette image au poste déporté, ce qui permet à un opérateur déporté de voir l'environnement du drone 2 et notamment d'une cible C. Dans l'exemple de la figure 1, le drone 2 est pourvu d'un ensemble 25 comprenant une pluralité de capteurs 24.

Grâce à l'unité de transmission de données 22, permettant au drone 2 de communiquer avec un poste déporté (non représenté), un opérateur (situé au niveau de ce poste) peut recevoir des données, notamment des données de l'environnement du drone 2, et lui envoyer des ordres de guidage pour le guider à distance (via l'unité de téléguidage 21).

Dans le cadre de la présente invention, le drone 2 peut présenter des tailles très variées.

Dans un mode de réalisation particulier (non limitatif), le drone 2 est tel qu'il peut s'inscrire dans un cube de 3 mètres de côtés.

En outre, dans une variante particulière de ce mode de réalisation particulier, le drone 2 est de type « nano-drone » et présente, de préférence, les caractéristiques suivantes :
- une altitude de vol comprise entre 0 et 50 mètres ;
- une taille inférieure à celle d'un cube de vingt centimètres de côtés, c'est-à-dire dont : L<20cm, l<20cm, h<20cm (avec L : longueur ; I : largeur ; h : hauteur) ; et
- une distance de rapprochement du drone 2 par rapport à un objectif (cible) qui est située entre 0 mètre (ou contact direct) et 10 mètres selon les cas.

Le dispositif de marquage de cible 1 pourvu d'un tel drone 2 qui présente, dans ce cas, une taille réduite permettant de voler à basse hauteur sans être repéré, est ainsi en mesure de s'approcher de façon discrète à proximité d'une cible C.

La miniaturisation du drone 2 (d'observation et d'acquisition) lui permet de réaliser plus facilement au moins certaines des fonctions suivantes :
- s'approcher d'une cible C ;
- observer une cible C ;
- marquer une cible C ;
- transmettre des informations ; et
- fournir un compte-rendu de mission.

Ledit système de localisation de cible 6, tel que décrit ci-dessus, peut être mis en œuvre dans différentes applications, et notamment dans un système de traitement de cible 26.

Le système de traitement de cible 26 comprend, dans ce cas, comme représenté sur la figure 9, au moins un système de localisation de cible 6, tel que celui précité. De plus l'engin volant 7, en particulier un missile 17, est de préférence autonome, et il comprend des moyens 27 (par exemple une charge militaire) de traitement d'une cible localisée, en l'occurrence un char 19.

Dans le cadre de la présente invention, on entend par traitement d'une cible, le fait d'agir sur cette cible, par exemple pour la neutraliser, la détruire, l'emporter,... Plus généralement, les moyens de traitement d'une cible sont donc des moyens usuels pour, par exemple, détruire, neutraliser ou emporter la cible.

L'engin volant 7 comprend dans ce cas :
- le détecteur 5 apte à détecter les signaux (à savoir des informations de position), émis par l'émetteur 4 du dispositif de marquage de cible 1 ;
- l'unité de gestion 11 (figure 3) formée de manière à gérer (ou traiter) notamment ces informations de position, en vue du guidage de l'engin volant 7 ; et
- les moyens 12 (figure 3) formés de manière à faire voler l'engin volant ; ainsi que
- les moyens 27 de traitement de la cible, par exemple une charge militaire.

Par ailleurs, dans une autre application, le système de localisation de cible 6, tel que décrit ci-dessus, peut être mise en œuvre lors de catastrophes naturelles (tremblement de terre, avalanche,...) ou d'accidents (explosions,...) par exemple d'origine industrielle. On sait que souvent, lors de catastrophes naturelles ou de certains accidents industriels notamment, les secours ont de grandes difficultés à identifier les blessés, par exemple dans des décombres ou sous la neige. Un ou plusieurs blessés pouvant par exemple se trouver sous des gravats, il est très difficile d'identifier les blessés en survolant les zones sinistrés à haute altitude. Une autre problématique est d'avoir parfois à s'occuper d'un grand nombre de blessés simultanément, ce qui nécessite de choisir les cibles prioritaires.

Dans ce cas particulier de système de traitement de cible 28, comme représenté sur la figure 10 :
- le dispositif de marquage de cible 1 est un dispositif de localisation de personnes 28 en détresse. Plus précisément, le drone 2 est en charge d'explorer la zone de l'accident ou de la catastrophe, de rechercher des personnes 28 et d'émettre un signal S lorsque une ou des personnes 28 recherchées sont localisées ; et
- ledit engin mobile 7 est un véhicule de secours, en particulier un aéronef de secours tel qu'un hélicoptère 29, qui est pourvu d'au moins un détecteur apte à détecter le signal émis par l'émetteur 4 du dispositif de marquage de cible 1 et qui a la capacité de secourir les blessés.

## Revendications

1. Dispositif de marquage de cible, ledit dispositif (1) comprenant au moins un drone (2) pourvu d'au moins un émetteur (4) apte à émettre une information de position,
**caractérisé en ce que** l'émetteur (4) comporte un élément d'activation (10) pour activer ledit émetteur (4) afin qu'il émette au moins à un instant donné au moins un signal (S) représentant l'information de position, et **en ce que** l'émetteur (4) est configuré pour émettre au moins l'un des signaux suivants : un signal infrarouge, un signal lumineux, un signal sonore, un signal généré par une substance chimique.

2. Dispositif selon la revendication 1,
**caractérisé en ce que** l'émetteur (4) configuré pour émettre un signal infrarouge comporte l'une des sources de chaleur suivantes : une source de chaleur de type chimique, une source de chaleur de type électrique.

3. Dispositif selon l'une des revendications 1 et 2,
**caractérisé en ce que** l'émetteur (4) configuré pour émettre un signal lumineux est configuré pour émettre un signal lumineux continu et/ou un signal lumineux discontinu et/ou un signal lumineux modulé.

4. Dispositif selon l'une quelconque des revendications précédentes, **caractérisé en ce que** l'émetteur (4) configuré pour émettre un signal sonore est configuré pour émettre un signal sonore modulé.

5. Dispositif selon la revendication 4,
**caractérisé en ce que** le signal sonore modulé est crypté.

6. Dispositif selon l'une quelconque des revendications précédentes, **caractérisé en ce que** l'émetteur (4) configuré pour émettre un signal généré par une substance chimique est configuré pour appliquer, comme substance chimique, une substance colorante.

7. Dispositif selon la revendication 6,
**caractérisé en ce que** l'émetteur (4) est configuré pour appliquer la substance colorante, à distance ou au contact.

8. Dispositif selon l'une des revendications 6 et 7,
**caractérisé en ce que** la substance colorante est l'une des substances suivantes : une substance photoluminescente, une substance phosphorescente, une substance fluorescente.

9. Dispositif selon l'une quelconque des revendications précédentes, **caractérisé en ce que** l'émetteur (4) configuré pour émettre un signal généré par une substance chimique est configuré pour appliquer, comme substance chimique, une substance olfactive.

10. Dispositif selon la revendication 9,
**caractérisé en ce que** l'émetteur (4) est configuré pour projeter ou vaporiser la substance olfactive.

11. Dispositif selon l'une quelconque des revendications précédentes, **caractérisé en ce que** le drone (2) est pourvu d'au moins deux émetteurs (4).

12. Dispositif selon la revendication 11,
**caractérisé en ce que** le drone (2) est pourvu d'au moins deux émetteurs (4) de types différents.

13. Dispositif selon l'une quelconque des revendications précédentes, **caractérisé en ce que** ledit émetteur (4) est lié au drone (2) selon l'une des manières suivants :
- ledit émetteur (4) est fixé sur ledit drone (2) ;
- ledit émetteur (4) est monté, de façon amovible, sur ledit drone (2) et est pourvu d'au moins un élément d'attache (16) configuré pour permettre d'attacher ledit émetteur (4) sur un support ;
- ledit émetteur (4) est tracté par le drone (2).

14. Dispositif selon l'une quelconque des revendications précédentes, **caractérisé en ce que** ledit drone (2) comporte au moins l'une des unités suivantes :
- une unité de guidage automatique (20) comprenant une unité centrale configurée pour déterminer automatiquement des ordres de guidage et un système de guidage configuré pour guider automatiquement le drone (2) conformément à des ordres de guidage déterminés par l'unité centrale ;
- une unité de téléguidage (21) comprenant une unité de réception configurée pour recevoir des ordres de guidage et un système de guidage configuré pour guider automatiquement le drone (2) conformément à des ordres de guidage reçus.

15. Système de localisation de cible,
**caractérisé en ce qu'**il comprend :
- au moins un dispositif de marquage de cible (1), tel que celui spécifié sous l'une quelconque des revendications 1 à 14 ; et
- au moins un engin mobile (7) comprenant au moins un détecteur (5) apte à détecter au moins un signal (S) émis par ledit au moins un émetteur (4) dudit drone (2) du dispositif de marquage de cible (1), pour localiser la cible (C).

16. Système de traitement de cible,
**caractérisé en ce qu'**il comprend au moins un système de localisation de cible (6), tel que celui spécifié sous la revendication 15, et **en ce que** l'engin mobile (7), en particulier un missile (17), comprend des moyens (27) de traitement d'une cible (C) localisée.
